# EUROPÄISCHE PATENTANMELDUNG

(11) **EP 4 202 254 A1**
(43) Veröffentlichungstag der Anmeldung: **28.06.2023**
(21) Anmeldenummer: 22205183.1
(22) Anmeldetag: 03.11.2022
(51) Int. Cl.: F16F 9/05, F16F 9/32, F16F 9/04, H01Q 1/00

(54) **LUFTFEDERANORDNUNG**

(30) Priorität: 17.12.2021 DE 102021214579
(71) Anmelder: ContiTech AG, 30165 Hannover (DE)
(72) Erfinder: Dr. Reck, Siegfried, 30165 Hannover (DE); Birkner, Nico, 30165 Hannover (DE)
(74) Vertreter: Continental Corporation

(57) **Zusammenfassung**

Luftfederanordnung (1, 2) mit einer Luftfeder (1) mit einem ersten Verbindungselement (11), welches ausgebildet ist, mit einem ersten Körper verbunden zu werden, mit einem zweiten Verbindungselement (12), welches ausgebildet ist, mit einem zweiten Körper verbunden zu werden, und mit einem Balg (13), welcher zwischen dem ersten Verbindungselement (11) und dem zweiten Verbindungselement (12) angeordnet ist. Die Luftfeder (1) weist eine Antenne (14), welche im Bereich des ersten Verbindungselements (11) angeordnet ist, und einen ersten Reflektor (15) auf, welcher im Bereich des zweiten Verbindungselements (12) angeordnet ist, oder umgekehrt. Die Luftfederanordnung (1, 2) weist eine Sende-/Empfangseinheit (21), welche ausgebildet ist,
• die Antenne (14) mittels einer vorbestimmten Leistung zum Aussenden einer elektromagnetischen Welle (A) mit einer ersten vorbestimmten Frequenz oberhalb von 1 GHz anzuregen und
• mittels der Antenne (14) eine reflektierte elektromagnetische Welle zu empfangen, und
eine Auswerteeinheit (22) auf, welche ausgebildet ist,
• eine Leistung und eine Reflektionsfrequenz der reflektierten elektromagnetischen Welle zu bestimmen,
• aus der Leistung der ausgesendeten elektromagnetischen Welle (A) und aus der Leistung der reflektierten elektromagnetischen Welle den Reflexionsfaktor zu bestimmen und
• aus dem Reflexionsfaktor und aus der Reflektionsfrequenz den Abstand zwischen Antenne (14) und erstem Reflektor (15) zu bestimmen.

## Beschreibung

Die vorliegende Erfindung betrifft eine Luftfederanordnung gemäß dem Patentanspruchs 1, eine Luftfeder zur Verwendung in einer derartigen Luftfederanordnung gemäß dem Patentanspruch 9 sowie ein Fahrzeug mit einer derartigen Luftfederanordnung gemäß dem Patentanspruch 10.

Zur Federung bzw. Dämpfung von Schwingungen können verschiedene Arten von Feder- bzw. Dämpfersystemen verwendet werden. So ist es beispielsweise bekannt, Schwingungen über Fluide, über Gase oder über Flüssigkeiten, zu dämpfen. Hierzu können hydraulische Flüssigkeiten sowie Luft verwendet werden. Bei einer Luftfederung wird dabei Luft innerhalb eines elastischen Balges sowie zwei starren Elementen angeordnet. Wird eine derartige Luftfeder bei Fahrzeugen wie z.B. Schienen- oder Straßenfahrzeugen, insbesondere bei Lastkraftwagen (Lkw), eingesetzt, so wirkt die Luft federnd in der Höhe entlang ihrer Längsachse bzw. Mittelachse zwischen dem Untergrund bzw. dem Fahrwerk des Fahrzeugs und dessen Aufbau wie z. B. Chassis, Ladefläche und dergleichen.

Derartige luftgefederte Systeme wie beispielsweise Lagerungen, Fahrwerke und dergleichen benötigen üblicherweise für ihren Betrieb eine Niveauregelung. Unter einer Niveauregelung ist bei Fahrzeugen ein System zu verstehen, mit welchem das Fahrzeug in seiner Höhe konstant gehalten, angehoben oder abgesenkt werden kann. Dies kann bei Anwendungen mit Luftfedern über den Innendruck der einzelnen Luftfedern erfolgen.

Zur Umsetzung einer Niveauregelung mittels Luftfedern ist es erforderlich, die aktuelle Höhe der Luftfedern bzw. den Federweg zu kennen. Dies kann mittels eines Istwert-Gebers erfolgen, welcher die aktuelle Federhöhe erfasst. Ein solcher Istwert-Geber kann außerhalb der Luftfeder angeordnet sein, wie z. B. ein Drehwinkelgeber oder ein Seildrahtpotentiometer.

Um den notwendigen Bauraum zu reduzieren oder um die Genauigkeit des Istwert-Gebers zu erhöhen, ist dessen Anordnung als integraler Bestandteil der Luftfeder vorteilhaft. Für die integrierte Messung der Federhöhe existieren zahlreiche Vorschläge wie z. B. die Ultraschall-Laufzeitmessung oder die Triangulation zwischen dem oberen und dem unteren Ende der Luftfeder (optisch, magnetisch).

Bei den Messverfahren der Laufzeitmessung werden elektromagnetische oder akustische Wellen als Messsignale mit endlicher, bekannter Geschwindigkeit zu einem Messobjekt hin ausgesendet. Das ausgesendete Signal wird von dem Messobjekt reflektiert und die Zeit, welche das Messsignal für den Hin- und Rückweg benötigt hat, als Laufzeit erfasst. Unter Berücksichtigung der Ausbreitungsgeschwindigkeit des Messsignals in dem Medium wie z.B. in der Luft kann der Abstand zwischen der Signalquelle und dem Messobjekt als Objektentfernung bestimmt werden.

Wird eine Ultraschallsignalquelle zur Erzeugung eines Ultraschallsignals verwendet und das Ultraschallsignal zum Messobjekt hin ausgesendet, so ist zu beachten, dass die Temperatur des Mediums wie z.B. der Luft einen relevanten Einfluss auf die Ausbreitungsgeschwindigkeit haben kann. Daher kann die Qualität der Abstandsmessung bzw. der Abstandsbestimmung erhöht und damit die Messgenauigkeit des Abstands verbessert werden, indem die Temperatur des Mediums parallel oder zumindest ausreichend zeitnah ebenfalls sensorisch erfasst und bei der Bestimmung der Objektentfernung berücksichtigt wird.

Hierzu können separate Temperatursensoren verwendet werden, was jedoch nachteiligerweise zu erhöhten Kosten hinsichtlich Anschaffung und bzw. oder Montage und bzw. oder zu einem erhöhten Bauraumbedarf für den Sensor selbst, dessen Auswerteelektronik und bzw. oder die Verkabelung führen kann. Wird die Auswerteelektronik des Temperatursensors in eine Steuerungseinheit oder dergleichen des Ultraschallsensors integriert, kann dies dort zu einem entsprechenden zusätzlichen Aufwand führen und bzw. oder dort einen zusätzlichen Bauraum einnehmen.

Eine Abstandsmessung mit Hilfe der optischen Triangulation benötigt prinzipbedingt einen kleinstmöglichen Abstand zwischen dem Sensor und dem Reflektor. Bei den modernen Time-of-Flight-Sensoren, die mit den sogenannten "Single-Photon-Dioden" arbeiten, ist dieser Mindestabstand kleiner als bei den älteren Systemen. In beiden Fällen kann unvermeidlicher Staub, der sich auf die lichtempfindlichen Komponenten legt, die Funktionsweise beeinträchtigen.

Abstandssensoren, die auf der Messung der Feldstärke von statischen bzw. niederfrequenten elektrischen oder magnetischen Feldern beruhen, weisen eine stark nichtlineare Kennlinie auf, weil die Feldstärken mit der dritten Potenz des Abstands abnehmen. Dadurch sinkt die Empfindlichkeit dieses Messprinzips mit dem Abstand.

Die EP 2 728 217 A1 beschreibt eine Luftfeder-Höhenmessanordnung, die eine Magnetfeld-Sendeanordnung und eine Magnetfeld-Empfangsanordnung umfasst. Die Magnetfeldsendeanordnung ist so ausgelegt, dass sie einen ersten Zustand und einen zweiten Zustand in Bezug auf die Magnetfeldempfangsanordnung einnehmen kann. Eine der Magnetfeld-Sendeanordnung und der Magnetfeld-Empfangsanordnung umfasst eine erste Spule und eine zweite Spule, wobei die andere der Magnetfeld-Sendeanordnung und der Magnetfeld-Empfangsanordnung eine dritte Spule umfasst. Eine erste Mittelachse der ersten Spule und eine zweite Mittelachse der zweiten Spule schließen einen ersten Winkel ein und im ersten Zustand schließen eine dritte Mittelachse der dritten Spule und die erste Mittelachse einen zweiten Winkel ein, wobei der erste und der zweite Winkel beide ungleich 0° sind.

Die EP 2 792 995 A1 beschreibt eine Abstandsmessvorrichtung, umfassend: ein Sensormodul, ein Zielmodul und ein Auswertemodul, wobei das Sensormodul und das Zielmodul so montierbar sind, dass sie eine Bewegung in Bezug aufeinander entlang einer Bewegungstrajektorie ausführen, wobei das Zielmodul ein Magnetfelderzeugungselement mit einer Magnetpolachse umfasst, wobei das Sensormodul ein erstes Magnetfeldsensorarray umfasst, das entfernt von der Bewegungstrajektorie angeordnet ist. Das erste Magnetfeldsensorarray umfasst einen ersten Magnetfeldsensor und einen zweiten Magnetfeldsensor, wobei eine Hauptabtastrichtung des ersten Magnetfeldsensors in Bezug auf eine Hauptabtastrichtung des zweiten Magnetfeldsensors geneigt ist, wobei das Abtastmodul und das Zielmodul vorteilhafterweise innerhalb der druckbeaufschlagbaren Kammer einer Luftfeder angeordnet sein können, die durch eine erste Montageplatte, eine zweite Montageplatte und ein flexibles Element der Luftfeder definiert ist (darin enthalten ist).

Eine Aufgabe der vorliegenden Erfindung ist es, eine Luftfeder bzw. eine Luftfederanordnung der eingangs beschriebenen Art bereit zu stellen, so dass die auf die Luftfeder wirkenden Kräfte genauer, einfacher, verlässlicher und bzw. oder kostengünstiger sensorisch erfasst werden können. Dies soll insbesondere für Luftfedern von Fahrzeugen, insbesondere von Lastkraftwagen, erfolgen. Zumindest soll eine Alternative zu bekannten derartigen Luftfedern bzw. Luftfederanordnungen geschaffen werden.

Die Aufgabe wird erfindungsgemäß durch eine Luftfederanordnung, durch eine Luftfeder sowie durch ein Fahrzeug mit den Merkmalen der unabhängigen Ansprüche gelöst. Vorteilhafte Weiterbildungen sind in den Unteransprüchen beschrieben.

Somit betrifft die vorliegende Erfindung eine Luftfederanordnung mit wenigstens einer Luftfeder mit einem ersten Verbindungselement, welches ausgebildet ist, mit einem ersten Körper verbunden zu werden, mit einem zweiten Verbindungselement, welches ausgebildet ist, mit einem zweiten Körper verbunden zu werden, und mit einem Balg, welcher zwischen dem ersten Verbindungselement und dem zweiten Verbindungselement entlang einer Längsachse angeordnet ist und einen luftgefüllten Innenraum luftdicht umschließt. Zwischen den beiden Körpern kann somit eine Dämpfung bzw. Federung mittels der Luft im Innenraum der Luftfeder stattfinden, wie bisher bekannt.

Die erfindungsgemäße Luftfederanordnung ist dadurch gekennzeichnet, dass die Luftfeder wenigstens eine Antenne, welche im Bereich des ersten Verbindungselements angeordnet ist, und wenigstens einen ersten Reflektor aufweist, welcher im Bereich des zweiten Verbindungselements angeordnet ist, oder umgekehrt. Der Reflektor ist ausgebildet, elektromagnetische Wellen zu reflektieren, was beispielsweise mittels einer Metallplatte oder eines Metallrings als Reflektor erfolgen kann.

Die erfindungsgemäße Luftfederanordnung weist auch wenigstens eine Sende-/Empfangseinheit auf, welche ausgebildet ist,
- die Antenne mittels einer vorbestimmten Leistung zum Aussenden wenigstens einer elektromagnetischen Welle mit wenigstens einer ersten vorbestimmten Frequenz oberhalb von 1 GHz, vorzugsweise von ca. 2,54 GHz, anzuregen und
- mittels der Antenne eine reflektierte elektromagnetische Welle zu empfangen.

Die erfindungsgemäße Luftfederanordnung weist ferner eine Auswerteeinheit auf, welche ausgebildet ist,
- eine Leistung und eine Reflektionsfrequenz der reflektierten elektromagnetischen Welle zu bestimmen,
- aus der Leistung der ausgesendeten elektromagnetischen Welle und aus der Leistung der reflektierten elektromagnetischen Welle den Reflexionsfaktor zu bestimmen und
- aus dem Reflexionsfaktor und aus der Reflektionsfrequenz den Abstand zwischen Antenne und erstem Reflektor zu bestimmen.

Der vorliegenden Erfindung liegt dabei die Erkenntnis zugrunde, dass auf diese Art und Weise eine Luftfeder mit einem erfindungsgemäßen Abstandssensor umgesetzt werden kann, welcher anstelle von niederfrequenten magnetischen Feldern mit elektromagnetischen Wellen in einem Frequenzband oberhalb von 1 GHz, d.h. im Bereich der Mikrowellen, arbeitet.

Mit anderen Worten kann hierzu an einem Ende der Luftfeder eine Antenne angeordnet werden, welche ein elektromagnetisches Wellenfeld erzeugen kann. An dem anderen Ende der Luftfeder kann mindestens Reflektor angeordnet sein, welcher das ausgesendete elektromagnetische Wellenfeld zur Antenne zurück reflektieren kann. Vorzugsweise kann der Reflektor als Resonator umgesetzt werden, welcher auf eine feste Frequenz abgestimmt ist.

In jedem Fall entspricht der räumliche Abstand zwischen der Antenne und dem Reflektor bzw. dem Resonator der zu messenden Federhöhe der Luftfeder. Die entsprechende Kette der Signalverarbeitung kann in der Form umgesetzt werden, dass die Antenne und der Reflektor bzw. der Resonator eine Hochfrequenz-Übertragungsstrecke bilden, dessen komplexer Reflexionsfaktor sich mit dem Abstand zwischen den beiden Komponenten systematisch ändert.

Für die Messung des frequenzabhängigen Reflexionsfaktors kann ein Mikrowellen-Sende-/Empfänger die Antenne mit einer konkreten Frequenz oder auch mit einem frequenzvariablen Signal, jeweils mit einer definierten Leistung, speisen, um das elektromagnetische Wellenfeld zu erzeugen, das mit dem Reflektor bzw. mit dem Resonator in Wechselwirkung steht.

Der Mikrowellen-Sende-/Empfänger misst, vorzugsweise mit Hilfe eines Richtkopplers, gleichzeitig die eingespeiste Leistung und den von der Antenne reflektierten Anteil. Die Messdaten gelangen, beispielsweise über einen digitalen Datenbus, zu einer intelligenten Auswerteeinheit, welche daraus den komplexen Reflexionsfaktor für die aktuell verwendete Sendefrequenz berechnet und vorzugsweise ausgibt.

Vorteilhaft ist hieran, dass gegenüber der Messung mit niederfrequenten Feldern eine höhere Empfindlichkeit der Abstands- bzw. Distanzmessung erreicht werden kann, besonders bei größeren Abständen relativ zur Bauhöhe der Luftfeder. Auch kann die Frequenz als weitere Dimension der Messung genutzt werden, welche zusätzliche Informationen liefern kann, z. B. über die Eigenschaften des Materials, in welches der Reflektor bzw. der Resonator ggfs. eingebettet ist. Ferner wird keine Blockdistanz benötigt. Des Weiteren ist diese Art der Abstands- bzw. Distanzmessung unempfindlich gegen Verschmutzung und Temperatureinflüsse.

Gemäß einem Aspekt der Erfindung ist die Sende-/Empfangseinheit ferner ausgebildet, die Antenne mittels einer vorbestimmten Leistung zum Aussenden wenigstens einer frequenzvariablen elektromagnetischen Welle, vorzugsweise eines Sweeps und bzw. oder eines Chirps, oberhalb von 1 GHz anzuregen. Hierdurch kann die Anregung von Reflektionen verbessert werden. Insbesondere kann die Anregung der Resonanz verbessert bzw. sichergestellt werden, falls der Reflektor als Resonator ausgebildet ist, wie nachfolgend näher erläutert wird.

Gemäß einem weiteren Aspekt der Erfindung ist der erste Reflektor als erster Resonator mit einer Reflektionsfrequenz oberhalb von 1 GHz ausgebildet und die Sende-/Empfangseinheit ist ausgebildet, die Antenne mittels einer vorbestimmten Leistung zum Aussenden einer elektromagnetischen Welle mit der Reflektionsfrequenz des ersten Resonators anzuregen. Dies kann die Amplitude bzw. Leistung der reflektierten Welle erhöhen und hierdurch die Messgenauigkeit steigern.

Gemäß einem weiteren Aspekt der Erfindung weist die Luftfeder wenigstens einen zweiten Reflektor, vorzugsweise einen zweiten Resonator, auf, welcher an dem Balg, vorzugsweise außenliegend, angeordnet oder in den Balg eingebettet ist. Dies kann die Möglichkeiten der Umsetzung bzw. der Nutzung der erfindungsgemäßen Art der Abstands- bzw. Distanzmessung erweitern.

Gemäß einem weiteren Aspekt der Erfindung ist die Sende-/Empfangseinheit mittels eines Richtkopplers mit der Antenne verbunden. Dies kann die Umsetzung vereinfachen.

Gemäß einem weiteren Aspekt der Erfindung ist die Antenne eine Rahmenantenne, welche durch einen Drahtkern der Luftfeder gebildet wird. Dies kann die Umsetzung vereinfachen bzw. kann hierdurch auf eine separate Antenne verzichtet werden.

Gemäß einem weiteren Aspekt der Erfindung ist die Luftfeder zylindrisch und rotationssymmetrisch zur Längsachse ausgebildet. Dies kann die Herstellung der Luftfeder sowie deren Montage und bzw. oder Verwendung vereinfachen.

Gemäß einem weiteren Aspekt der Erfindung ist das erste Verbindungselement ein Kolben und das zweite Verbindungselement eine Bördelplatte. Auf diese Art und Weise kann die sensorische Abstands- bzw. Distanzmessung wie zuvor beschrieben zwischen dem Kolben der Luftfeder und dem ersten Körper als Untergrund bzw. als Auflage erfolgen. Insbesondere kann der erste Körper ein Fahrwerk eines Fahrzeugs sein.

Die Erfindung betrifft auch eine Luftfeder zur Verwendung in einer Luftfederanordnung wie zuvor beschrieben. Hierdurch kann eine Luftfeder zur Verfügung gestellt werden, um die zuvor beschriebene Luftfederanordnung zu realisieren und deren Eigenschaften und Vorteile zu nutzen.

Die Erfindung betrifft ferner ein Fahrzeug mit wenigstens einer Luftfederanordnung wie zuvor beschrieben. Entsprechend kann die zur vorbeschriebene Luftfederanordnung zur Niveauregelung eines Fahrzeugs verwendet werden. Vorzugsweise können hierzu mehrere erfindungsgemäße Luftfederanordnungen verwendet werden, welche an verschiedenen Stellen des Fahrzeugs z. B. zwischen dessen Ladefläche und z. B. dessen Fahrwerk angeordnet sind. Hierbei kann es besonders vorteilhaft sein, vier derartige Luftfederanordnungen zu verwenden, welche vorzugsweise an oder nahe den vier Ecken z. B. der Ladefläche des Fahrzeugs angeordnet sind.

Mehrere Ausführungsbeispiele und weitere Vorteile der Erfindung werden nachstehend im Zusammenhang mit den folgenden schematischen Figuren erläutert. Darin zeigt:
- Fig. 1: eine Ansicht einer erfindungsgemäßen Luftfederanordnung;
- Fig. 2: einen Querschnitt durch eine erfindungsgemäße Luftfeder gemäß einem ersten Ausführungsbeispiels;
- Fig. 3: einen Querschnitt durch eine erfindungsgemäße Luftfeder gemäß einem zweiten Ausführungsbeispiels;
- Fig. 4: einen Querschnitt durch eine erfindungsgemäße Luftfeder gemäß einem dritten Ausführungsbeispiels;
- Fig. 5: einen Querschnitt durch eine erfindungsgemäße Luftfeder gemäß einem vierten Ausführungsbeispiels; und
- Fig. 6: einen Querschnitt durch eine erfindungsgemäße Luftfeder gemäß einem fünften Ausführungsbeispiels.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X kann auch als Mittelachse X bezeichnet werden.

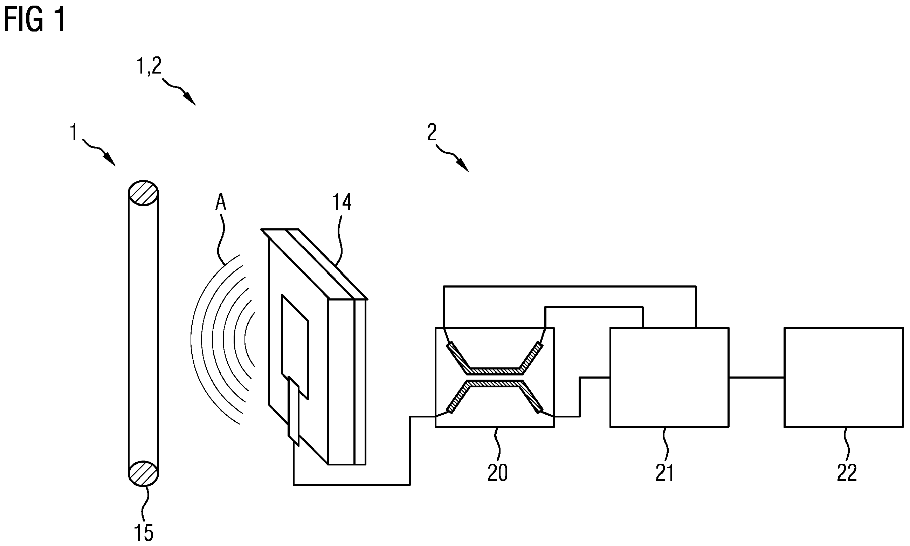

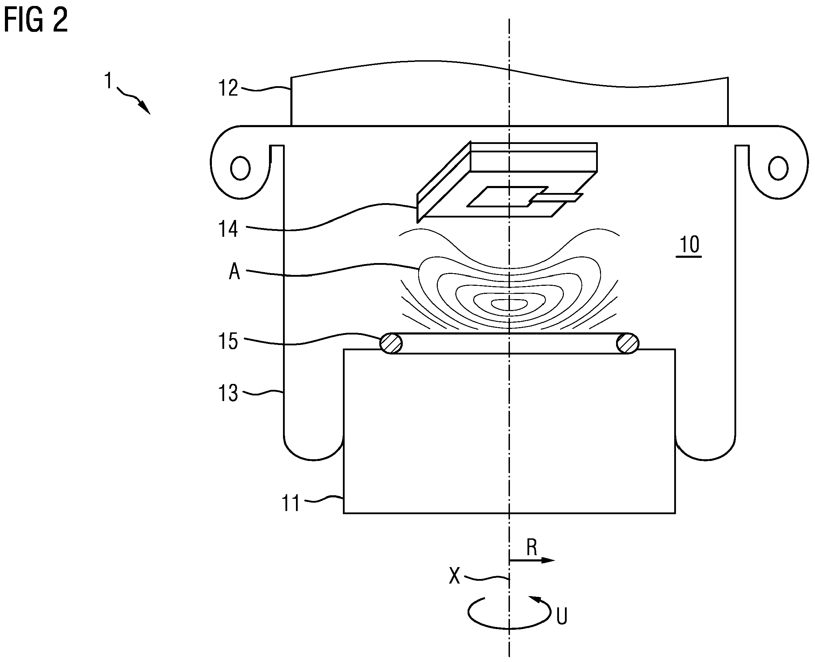

Eine erfindungsgemäße Luftfederanordnung 1, 2, wie in der Figur 1 dargestellt, weist zum einen eine erfindungsgemäße Luftfeder 1 auf, welche in verschiedenen Ausführungsformen in den Figuren 2 bis 6 dargestellt wird, und zum anderen eine Messeinheit 2, welche auch als Messelektronik 2 bezeichnet werden kann.

Die erfindungsgemäße Luftfeder 1 weist jeweils ein erstes, unteres Verbindungselement 11 auf, welches von einem Kolben 11 gebildet wird. Entlang der Längsachse X oberhalb des Kolbens 11 ist ein zweites, oberes Verbindungselement 12 in Form einer Bördelplatte 12 angeordnet. Der Kolben 11 und die Bördelplatte 12 sind entlang der Längsachse X durch einen elastischen Balg 13 miteinander verbunden. Der Kolben 11, die Bördelplatte 12 und der Balg 13 schließen gemeinsam ein Luftvolumen innerhalb eines Innenraums 10 ein, welches federnd dämpfend entlang der Längsachse X wirken kann. Hierdurch wird die federelastische Wirkung der Luftfeder 1 entlang im Wesentlichen der Längsachse X zwischen dem Kolben 11 und der Bördelplatte 12 erreicht.

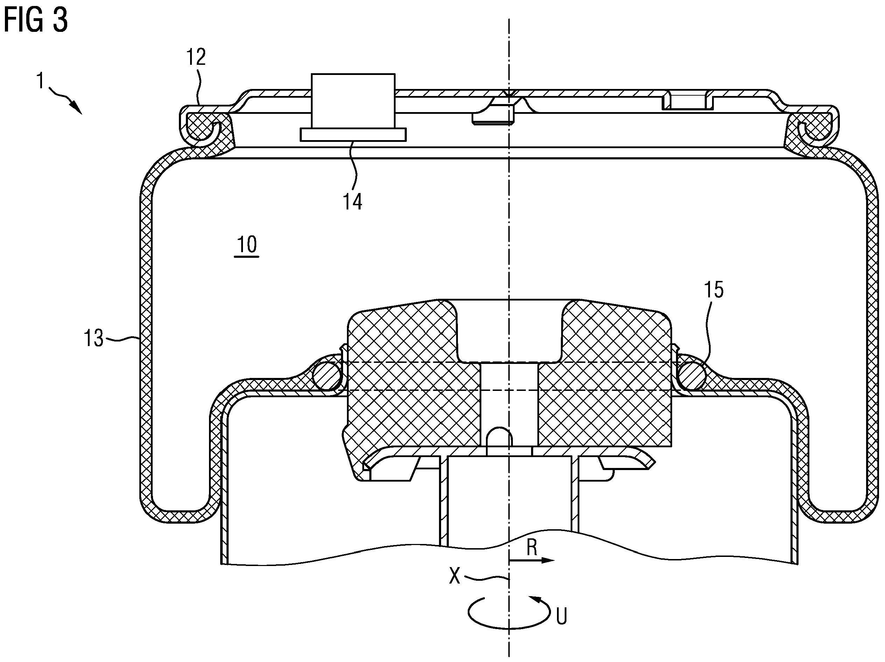

Die erfindungsgemäße Luftfeder 1 weist auch eine Antenne 14 auf, welche bei dem ersten Ausführungsbeispiel der Figur 2 sowie bei dem zweiten Ausführungsbeispiel der Figur 3 als Patchantenne 14 umgesetzt und im Bereich der Bördelplatte 12 im Innenraum 10 und entlang der Längsachse X nach unten hin ausgerichtet angeordnet ist. Es ist ferner ein erster Resonator 15 in Form eines ersten Reflektors 15 am Kolben 11 im Innenraum 10 und entlang der Längsachse X nach oben hin ausgerichtet angeordnet.

Die erfindungsgemäße Luftfeder 1 ist mittels ihres Kolbens 11 entlang der Längsachse X nach unten an einem ersten Körper (nicht dargestellt) feststehend montiert. Der erste Körper dient als Auflage der Luftfeder 1 und stellt im betrachteten Fall ein Fahrwerk eines Fahrzeugs (nicht dargestellt) dar. Entlang der Längsachse X nach oben ist die Bördelplatte 12 feststehend an einem zweiten Körper (nicht dargestellt) angeordnet. Der zweite Körper kann im betrachteten Ausführungsbeispiel ein Bestandteil eines Chassis oder einer Ladefläche des Fahrzeugs sein.

Die Messeinheit 2 weist einen Richtkoppler 20 auf, welcher mit der Antenne 14 der Luftfeder 1 verbunden ist. Der Richtkoppler 20 ist ferner mit einer Sende-/Empfangseinheit 21 der Messeinheit 2 verbunden, so dass die Sende-/Empfangseinheit 21 die Antenne 14 mittels des Richtkopplers 20 betreiben kann. Die Sende-/Empfangseinheit 21 ist ferner mit einer Auswerteeinheit 22 verbunden, siehe Figur 1.

Erfindungsgemäß kann nun die Sende-/Empfangseinheit 21 mittels des Richtkopplers 20 die Antenne 14 mit einer vorbestimmten Leistung zum Aussenden einer elektromagnetischen Welle A im Frequenzbereich oberhalb von 1 GHz anregen, was mit einer konkreten ersten Frequenz mit beispielsweise ca. 2,54 GHz oder auch frequenzvariabel mittels eines Sweeps A und bzw. oder mittels eines Chirps A oberhalb von 1 GHz erfolgen kann. Die elektromagnetische Welle A kann auch als elektromagnetisches Wellenfeld A bezeichnet werden.

In jedem Fall führt die Anregung zu einer Reflektion der ausgesendeten elektromagnetischen Welle A in Form einer reflektierten elektromagnetischen Welle, welche von der Antenne 14 empfangen und mittels des Richtkopplers 20 der Sende-/Empfangseinheit 21 bzw. der dahinter angeordneten Auswerteeinheit 22 zugeführt werden kann. Die Auswerteeinheit 22 kann hieraus die Leistung und die Reflektionsfrequenz der reflektierten elektromagnetischen Welle, insbesondere deren Resonanzfrequenz, bestimmen, aus der Leistung der ausgesendeten elektromagnetischen Welle A und aus der Leistung der reflektierten elektromagnetischen Welle den Reflexionsfaktor bestimmen und aus dem Reflexionsfaktor und aus der Reflektionsfrequenz den Abstand zwischen Antenne 14 und erstem Reflektor 15 bzw. erstem Resonator 15 bestimmen.

Somit kann erfindungsgemäß die aktuelle Höhe der Luftfeder 1 bzw. dessen Federweg mittels Mikrowellen bestimmt werden. Diese Information kann seitens des Fahrzeugs für eine Niveauregelung mittels mehrerer erfindungsgemäße Luftfedern 1 verwendet werden.

Dabei zeigt Figur 2 eine eher abstrahierte Darstellung einer erfindungsgemäßen Luftfeder 1 als ersten Ausführungsbeispiel und die Figur 3 eine konkretere Darstellung einer Nutzfahrzeug-Luftfeder 1, bei welcher die Antenne 14 in einer druckdichten Durchführung angeordnet ist.

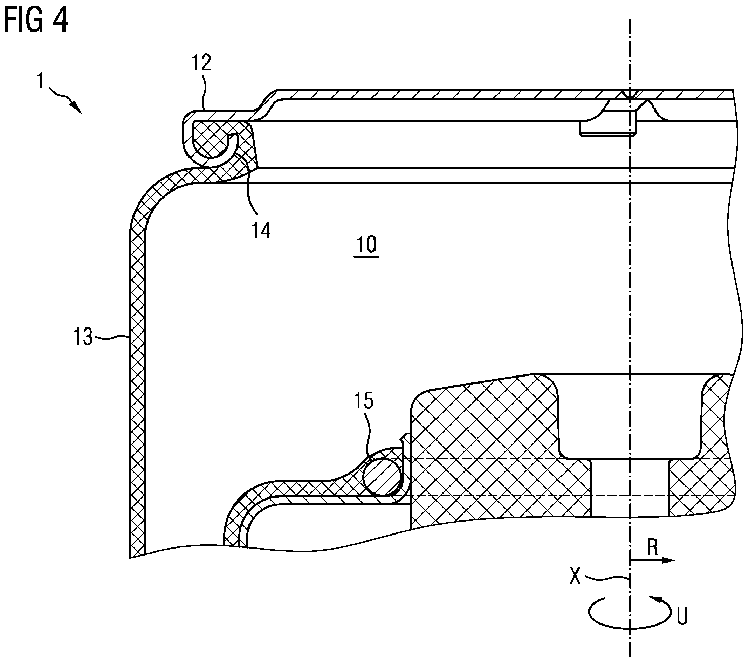

Figur 4 zeigt ein Ausführungsbeispiel, bei welchem ein Drahtkern der Luftfeder 1 als Rahmenantenne 14 genutzt wird, um die elektromagnetische Welle A zu erzeugen.

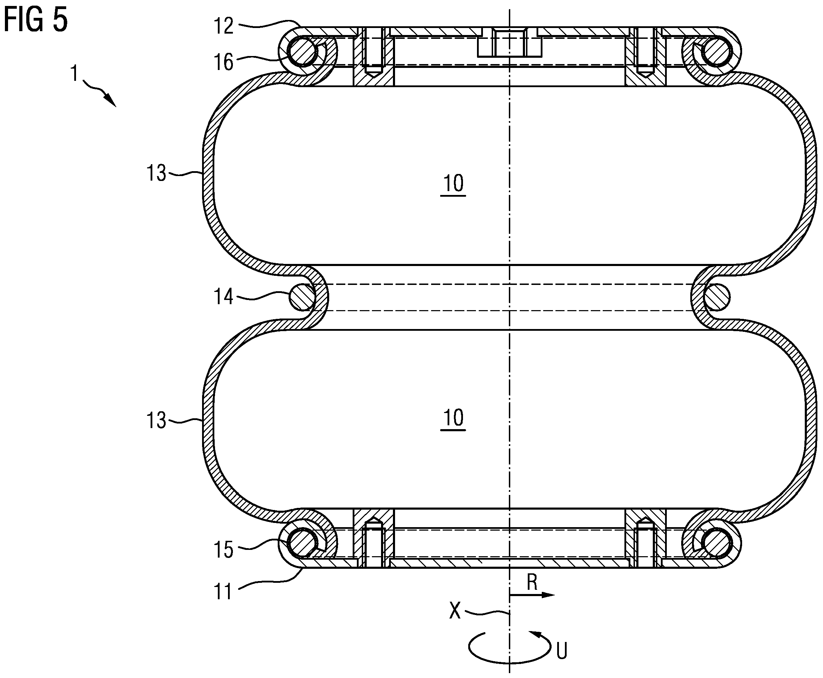

Figur 5 zeigt eine Luftfeder 1 für industrielle Anwendungen mit einer außen, mittig angeordneten Antenne 14 und zwei Reflektoren 15, 16 in Form von Resonatoren 15, 16 in den Verbindungselementen 11, 12. Damit können die Abstände des oberen und unteren Teils der Luftfeder 1 unabhängig voneinander gemessen werden. Die Resonatoren 15, 16 funktionieren, obwohl sie durch das Metall der Verbindungselemente 11, 12 weitgehend umfasst werden.

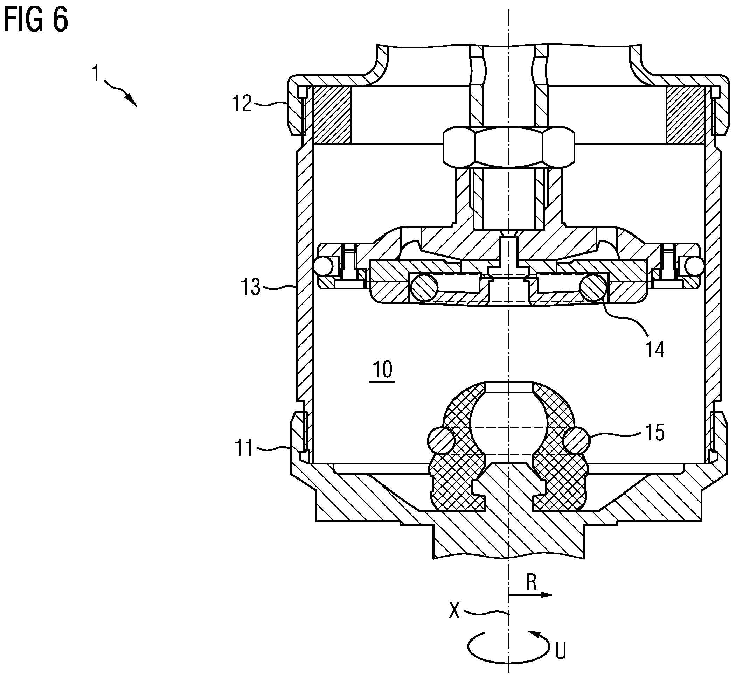

Figur 6. zeigt eine Anwendung in einer Luftfeder 1 für die Lagerung von Fahrerhäusern. Aufgrund der kurzen Wellenlänge des elektromagnetischen Wellenfeldes A eignen sich auch kleine Antennen 14 für den Aufbau der Übertragungsleitung und die damit durchgeführte Abstandsmessung.

### Bezugszeichenliste (Teil der Beschreibung)

- A: elektromagnetische Welle; elektromagnetisches Wellenfeld Sweep; Chirp

- R: radiale Richtung
- U: Umfangsrichtung
- X: Längsachse; Mittelachse

- 1, 2: Luftfederanordnung

- 1: Luftfeder
- 10: Innenraum
- 11: erstes, unteres Verbindungselement; Kolben
- 12: zweites, oberes Verbindungselement; Bördelplatte
- 13: Balg
- 14: Antenne; Patchantenne; Rahmenantenne
- 15: erster Reflektor bzw. erster Resonator
- 16: zweiter Reflektor bzw. zweiter Resonator

- 2: Messeinheit; Messelektronik
- 20: Richtkoppler
- 21: Sende-/Empfangseinheit
- 22: Auswerteeinheit

## Patentansprüche

1. Luftfederanordnung (1, 2)
mit wenigstens einer Luftfeder (1)
mit einem ersten Verbindungselement (11), welches ausgebildet ist, mit einem ersten Körper verbunden zu werden,
mit einem zweiten Verbindungselement (12), welches ausgebildet ist, mit einem zweiten Körper verbunden zu werden, und
mit einem Balg (13), welcher zwischen dem ersten Verbindungselement (11) und dem zweiten Verbindungselement (12) entlang einer Längsachse (X) angeordnet ist und einen luftgefüllten Innenraum (10) luftdicht umschließt,
**dadurch gekennzeichnet, dass**
die Luftfeder (1) wenigstens eine Antenne (14), welche im Bereich des ersten Verbindungselements (11) angeordnet ist, und wenigstens einen ersten Reflektor (15) aufweist, welcher im Bereich des zweiten Verbindungselements (12) angeordnet ist, oder umgekehrt,
mit wenigstens einer Sende-/Empfangseinheit (21), welche ausgebildet ist,
• die Antenne (14) mittels einer vorbestimmten Leistung zum Aussenden wenigstens einer elektromagnetischen Welle (A) mit wenigstens einer ersten vorbestimmten Frequenz oberhalb von 1 GHz, vorzugsweise von ca. 2,54 GHz, anzuregen und
• mittels der Antenne (14) eine reflektierte elektromagnetische Welle zu empfangen, und
mit einer Auswerteeinheit (22), welche ausgebildet ist,
• eine Leistung und eine Reflektionsfrequenz der reflektierten elektromagnetischen Welle zu bestimmen,
• aus der Leistung der ausgesendeten elektromagnetischen Welle (A) und aus der Leistung der reflektierten elektromagnetischen Welle den Reflexionsfaktor zu bestimmen und
• aus dem Reflexionsfaktor und aus der Reflektionsfrequenz den Abstand zwischen Antenne (14) und erstem Reflektor (15) zu bestimmen.

2. Luftfederanordnung (1, 2) nach Anspruch 1,
wobei die Sende-/Empfangseinheit (21) ferner ausgebildet ist, die Antenne (14) mittels einer vorbestimmten Leistung zum Aussenden wenigstens einer frequenzvariablen elektromagnetischen Welle (A), vorzugsweise eines Sweeps (A) und/oder eines Chirps (A), oberhalb von 1 GHz anzuregen.

3. Luftfederanordnung (1, 2) nach Anspruch 1 oder 2,
wobei der erste Reflektor (15) als erster Resonator (15) mit einer Reflektionsfrequenz oberhalb von 1 GHz ausgebildet ist und
wobei die Sende-/Empfangseinheit (21) ausgebildet ist, die Antenne (14) mittels einer vorbestimmten Leistung zum Aussenden einer elektromagnetischen Welle (A) mit der Reflektionsfrequenz des ersten Resonators (15) anzuregen.

4. Luftfederanordnung (1, 2) nach einem der vorangehenden Ansprüche, wobei die Luftfeder (1) wenigstens einen zweiten Reflektor (15), vorzugsweise einen zweiten Resonator (15), aufweist, welcher an dem Balg (13), vorzugsweise außenliegend, angeordnet oder in den Balg (13) eingebettet ist.

5. Luftfederanordnung (1, 2) nach einem der vorangehenden Ansprüche, wobei die Sende-/Empfangseinheit (21) mittels eines Richtkopplers (20) mit der Antenne (14) verbunden ist.

6. Luftfederanordnung (1, 2) nach einem der vorangehenden Ansprüche, wobei die Antenne (14) eine Rahmenantenne ist, welche durch einen Drahtkern der Luftfeder (1) gebildet wird.

7. Luftfederanordnung (1, 2) nach einem der vorangehenden Ansprüche,
**dadurch gekennzeichnet, dass**
die Luftfeder (1) zylindrisch und rotationssymmetrisch zur Längsachse (X) ausgebildet ist.

8. Luftfederanordnung (1, 2) nach einem der vorangehenden Ansprüche,
**dadurch gekennzeichnet, dass**
das erste Verbindungselement (11) ein Kolben (11) und
das zweite Verbindungselement (12) eine Bördelplatte (12) ist.

9. Luftfeder (1) zur Verwendung in einer Luftfederanordnung (1, 2) nach einem der vorangehenden Ansprüche.

10. Fahrzeug mit wenigstens einer Luftfederanordnung (1, 2) nach einem der Ansprüche 1 bis 8.
